# EUROPEAN PATENT SPECIFICATION

(11) **EP 1 558 439 B1**
(45) Date of publication and mention of the grant of the patent: **09.09.2009**
(21) Application number: 03764243.6
(22) Date of filing: 09.07.2003
(51) Int. Cl.: B29C 53/60, B29C 53/80, B29K 105/10

(54) **APPARATUS AND METHOD FOR WINDING FIBERS ON A MANDREL TO OBTAIN A TUBE SHAPED STRUCTURE**
VORRICHTUNG UND VERFAHREN ZUM WICKELN VON FASERN AUF EINEN DORN ZUM ERHALT EINER ROHRFÖRMIGEN KONSTRUKTION
DISPOSITIF ET PROCEDE SERVANT A ENROULER DES FIBRES SUR UN MANDRIN POUR OBTENIR UNE STRUCTURE TUBULAIRE

(30) Priority: 10.07.2002 NL 1021043
(43) Date of publication of application: 03.08.2005
(73) Proprietor: Amipox International Limited, Manama (BH)
(72) Inventor: TOLHOEK, Peter, B-2970 Schilde (BE)
(74) Representative: Hylarides, Paul Jacques
(86) International application number: PCT/NL2003/000505
(87) International publication number: WO 2004/007178

(56) References cited:
- DE-A- 4 005 772
- US-A- 3 301 505
- US-A- 3 378 427
- US-A- 4 251 036
- US-A- 4 532 169

## Description

The present invention relates to an apparatus for winding fibres onto a mandrel to obtain a tubular structure, wherein the apparatus comprises: a mandrel, a rotation device for causing the mandrel to rotate on its longitudinal axis, feed means for feeding the fibres for winding onto the mandrel, a guide member for guiding the fibres before they are wound onto the mandrel, a drive device for moving the guide member in the longitudinal direction of the mandrel.

Such an apparatus is known from US-A-3 301 505.

This is used to manufacture pipe pieces from fibres impregnated with for instance synthetic resin.

Such pipe pieces are used to replace metal, in particular steel, pipe pieces. Metal pipe pieces are after all less suitable for many applications, such as the transport of oxidizing or corrosive liquids.

It is now possible to manufacture pipe pieces which have sufficient strength. However, the manufacture of such pipe pieces takes a relatively long time; the pipe pieces are created by winding a series of fibres helically onto a mandrel, which fibres are preferably impregnated with a synthetic resin, repeating this winding method in opposite longitudinal direction and subsequently repeating these operations once again until the required thickness of the pipe piece is obtained. The pipe piece must then be pressed off the mandrel, heated in a furnace to cure the synthetic resin, and the pipe piece must then be finished.

The winding of fibres in particular takes a relatively long time, since a winding machine is only adapted to wind one pipe piece.

From US-A-3 378 427 is known such an apparatus and method, wherein the winding process can be accelerated.

This document describes an apparatus for winding impregnated fibres onto a mandrel to obtain a tubular structure, wherein the apparatus comprises:
- a mandrel;
- a rotation device for causing the mandrel to rotate on its longitudinal axis;
- feed means for feeding the fibres for winding;
- a guide member extending in a circular arc, wherein the centre of the circular arc lies on the axis of the mandrel, for guiding the fibres before they are wound onto the mandrel; and
- a drive device for moving the guide member in the longitudinal direction of the mandrel.

In the case of an immobile guide member, as disclosed in US-3,378.427, when the end of the linear movement in the longitudinal direction of the mandrel is reached, a considerable part must still be continued in order to achieve that all wound fibres reach the end of the mandrel.

Only then can the linear guide member begin its movement in the opposite direction.

The object of the invention is to provide such an apparatus and method with which the above stated drawback is avoided.

According to the invention, this object is achieved by an apparatus according to claim 1 and by a method according to claim 9.

This object is achieved in that the guide member is rotatable around the longitudinal axis of the mandrel.

Owing to the rotation of the guide member, all fibres arrive simultaneously at an end of the mandrel; the movement does not therefore have to be continued until all fibres have arrived at the end of the mandrel.

The plane of the circular arc of the guide member will generally extend perpendicularly of the longitudinal axis of the mandrel; it is however also possible to allow this angle to vary from 90° so as to be able to achieve more optimal results with determined winding patterns.

The feature that the guide member is rotatable around the longitudinal axis of the mandrel, gives more flexibility during winding.

Another preferred embodiment teaches that the guide member is provided with protrusions for guiding the fibres.

It is possible in principle to make use of other forms of guide, but the use of protrusions in the form of for instance hooks has the advantage that threading of the fibres can take place easily.

Yet another preferred embodiment provides the measure that the guide member is suitable for separating the fibres into more than one strand and for guiding the strands such that they are wound onto the mandrel with a mutual interspacing.

It is pointed out here that the winding angle, i.e. the angle which the tangent of the winding on the surface of the mandrel encloses with the longitudinal axis of the winding, is defined by strength calculations, this angle amounting to 54°. It has been found that, depending of course on the thickness of the glass fibres, it is possible to arrange more threads simultaneously on the mandrel than would be the case with a single continuous strand of fibres.

When such an apparatus is applied, at least one helical recess is created between the fibres of a single wound layer. In order to achieve a complete filling of the pipe to be formed, this space will also have to be filled, for instance in a subsequent winding run.

In order to achieve this, another preferred embodiment of the invention proposes that the guide member is adapted to guide the strands of fibres such that the interspace between the strands is equal to the width of the strands wound onto the mandrel times the number of strands minus one. A helical recess is herein obtained with a width which can be filled during the subsequent winding run.

A more specific embodiment hereof teaches that the guide member is adapted to separate the fibres into two strands and to guide the strands such that the interspace between the strands is equal to the width of the strands wound onto the mandrel.

This is a particularly attractive embodiment wherein it is possible to completely fill an existing layer in two winding runs.

Yet another preferred embodiment teaches that each of the strands comprises only one fibre.

This has the result that the fibres are each wound onto the mandrel at a determined interspacing and that the thus formed interspaces must be filled during subsequent winding runs. Because between a first winding run in which interspaces are filled and a subsequent winding run in which such interspaces are at least partially filled an intermediate winding run is carried out wherein the fibres are arranged in an opposite direction, a close-knit "woven fabric" of fibres is created in this latter embodiment.

It is pointed out here that the thus formed pipe pieces differ in principle from pipes formed from one piece of woven fabric which are of course always provided with a seam. In the pipes manufactured according to this latter embodiment this is not the case because the fibres of the fabric are as it were woven onto the mandrel.

Known from DE-A-40 05 772 is an apparatus wherein a similar winding pattern is obtained as in the present invention. For this purpose however one strand is wound at a time, so that the winding takes a long time. By simultaneously winding a plurality of strands this period of time is shortened.

Another preferred embodiment teaches that the apparatus comprises an impregnating vessel which is placed between the feed means and the guide member and through which the fibres are guided. This measure provides the option of impregnating the fibres only just before the winding.

Other attractive embodiments are stated in the remaining sub-claims.

The present invention will be elucidated hereinbelow with reference to the annexed drawings, in which:
Figure 1 shows a schematic perspective view of an apparatus according to the invention,
Figure 2 is a perspective detail view of the construction shown in figure 1,
Figure 3 is a side view as according to arrow III in figure 2,
Figures 4A-F show side views of the winding pattern at various stages during winding in accordance with a first embodiment of the invention, and
Figures 5A-D show side views of winding patterns in accordance with a second embodiment of the present invention.

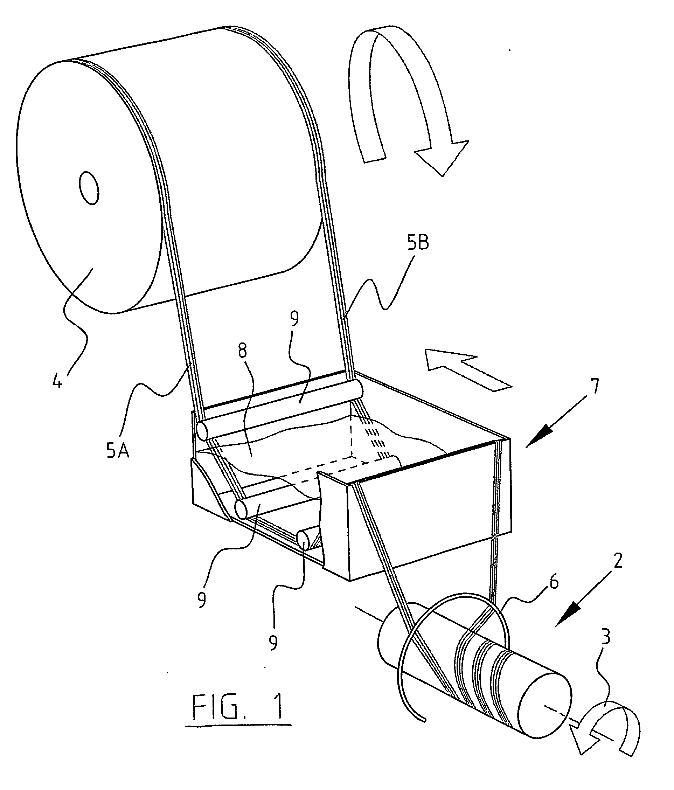

Figure 1 shows an apparatus according to the invention, comprising a winding mandrel 2 which is driven in rotation in the direction of arrow 3 by means of a prior art drive device not shown in the drawing. The apparatus further comprises a supply roll 4 for glass fibres 5 which in the present case are fed in two strands 5A, 5B respectively from the supply roll and wound onto winding mandrel 2.

For guiding of the winding process use is made of a curved guide member 6. In the present embodiment the curved guide member 6 is arcuate, wherein the centre of the arc is located on the axis of winding mandrel 2.

As already stated in the preamble, such an apparatus is used to wind pipes from for instance glass fibres. It will be apparent that the invention is applicable not only for use with glass fibres, but also with other fibres, aramid fibres, carbon fibres and the like. In order to form such fibres into a pipe the wound fibres must be mutually connected, for which purpose use is made of an impregnating agent which is applied to the fibres before they are wound. The apparatus according to the invention comprises for this purpose an impregnating vessel 7 filled with an impregnating agent 8, for instance in the form of a synthetic resin, and wherein guide rollers 9 are arranged in impregnating vessel 7 to guide the fibres. It will be apparent that the configuration of the impregnating vessel shown in this figure can be varied in numerous ways.

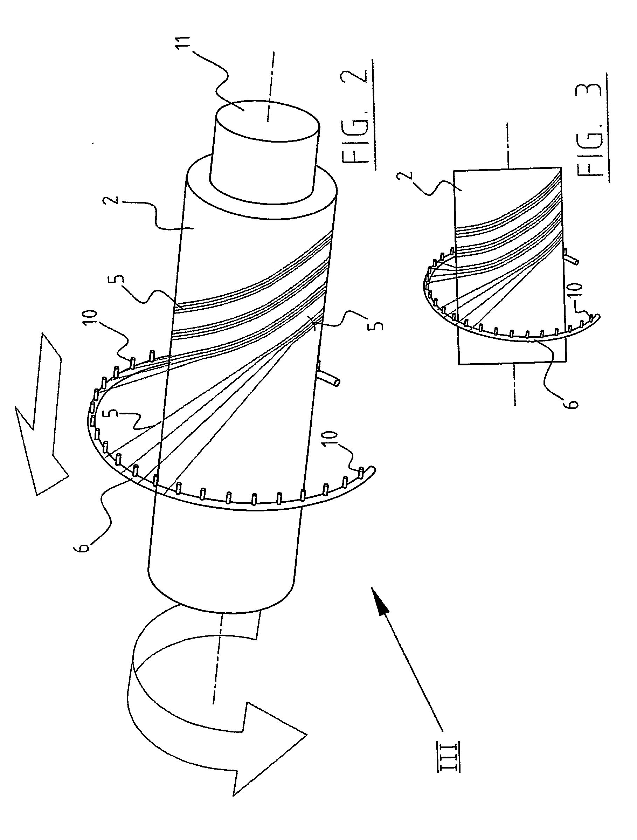

Figure 2 shows the curved guide member 6 in more detail. This shows that the curved guide member is provided with a number of protrusions 10, which in the present case are suitable to each guide a glass fibre. It is in principle also possible to arrange for instance guide openings in the curved guide member 6 in order to guide the glass fibres. It is however easy to thread the glass fibres by applying the protrusions 10.

According to the invention, the guide member 6 rotates about the axis of winding mandrel 2, whereby more degrees of freedom are created in obtaining the winding pattern, for instance when the winding direction is reversed in axial sense at the ends of the winding mandrel 2, for which purpose the winding mandrel 2 is also provided with shaft ends 11.

In the making of a closure of the wound pipe at one of the two shaft end points, it may be advantageous to rotate guide member 6 on its axis.

It is also possible, as shown in figure 3, to rotate the curved guide member 6 around an axis extending perpendicularly of the axis of the winding mandrel. An extra degree of freedom is hereby also created which can be applied in obtaining determined winding patterns.

It is known from the prior art to wind all glass fibres coming from supply roll 4 simultaneously in one strand onto the mandrel. As already stated, this results in a limited winding capacity. It is possible to wind a plurality of glass fibres simultaneously onto the mandrel by increasing the number of fibres. This is not possible within one strand, or hardly so, since the winding angles, i.e. the angles at which the fibres make contact with the mandrel, otherwise vary too much. By distributing the glass fibres over different strands it becomes possible to arrange a greater number of fibres on the winding mandrel while retaining a small variation in winding angles.

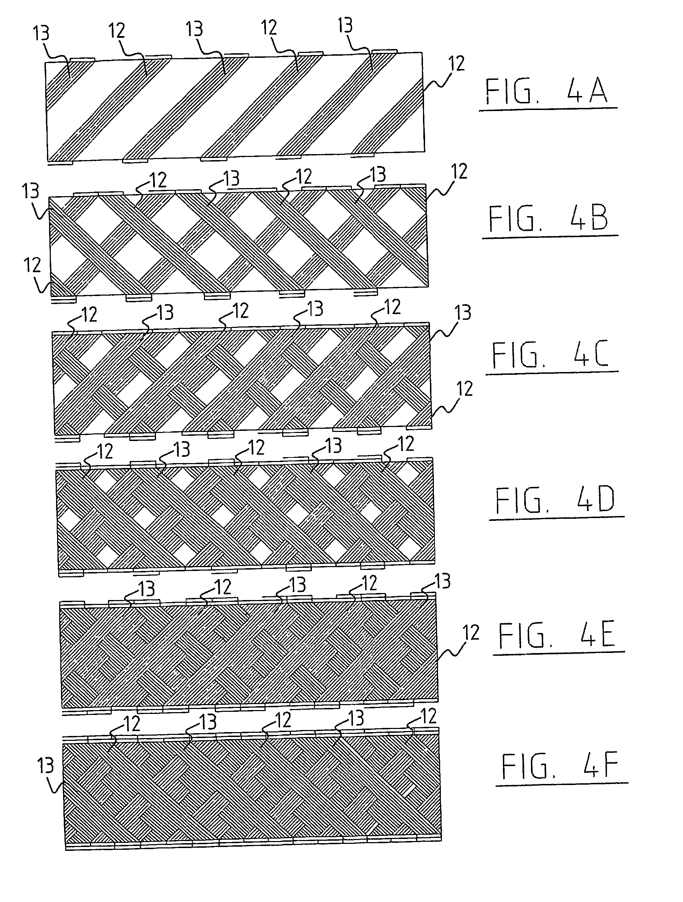

A winding pattern can for instance be applied here with the result shown in figures 4A-4F. When, as shown in figure 4A, the first winding layer is arranged which is made up of two strands 12, 13, the linear movement of the curved guide member is reversed, and the same strands are placed in reversed linear direction. In figure 4C the transporting direction is once again reversed during arranging of strands 12, 13, whereafter the whole process is repeated another three times as illustrated in figures 4D-4F. A close-knit fabric structure of sufficient strength is hereby created.

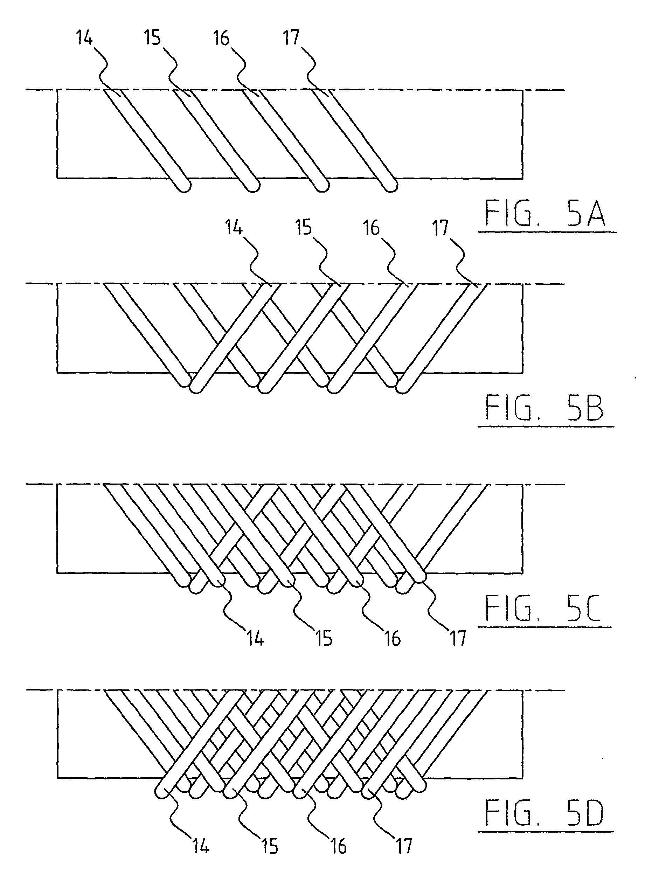

It is however also possible, as shown in figures 5A-5D, not to make use of strands of fibres but to treat each of the individual fibres as a strand.

Figure 5A thus shows the arrangement of a first layer formed by individual fibres 14, 15, 16, 17, which can be arranged simultaneously as a result of using a curved guide member 6, while figure 5B shows the following stage in the winding process, wherein the following layer is arranged, this once again in the form of the same fibres 14, 15, 16, 17. This process is repeated twice more as shown in figures 5C and 5D. A robust fabric is hereby obtained from individual fibres, whereby the strength of the pipe construction obtained therewith is greatly increased.

It is pointed out that it is of course also possible to combine more of such winding runs to form a single layer of the pipe construction, and that such a pipe construction will in general comprises diverse such layers.

## Claims

1. Apparatus for winding impregnated fibres onto a mandrel to obtain a tubular structure, wherein the apparatus comprises:
- a mandrel (2);
- a rotation device for causing the mandrel (2) to rotate on its longitudinal axis;
- feed means for feeding the fibres for winding;
- a guide member (6) extending in a circular arc, wherein the centre of the circular arc lies on the axis of the mandrel, for guiding the fibres before they are wound onto the mandrel (2); and
- a drive device for moving the guide member in the longitudinal direction of the mandrel, **characterized in that** the guide member is rotatable around the longitudinal axis of the mandrel (2).

2. Apparatus as claimed in claim 1, **characterized in that** the guide member (6) is provided with protrusions (10) for guiding the fibres.

3. Apparatus as claimed in any of the foregoing claims, **characterized in that** the guide member (6) is suitable for separating the fibres into more than one strand, and for guiding the strands such that they are wound onto the mandrel (2) with a mutual interspacing.

4. Apparatus as claimed in claim 3, **characterized in that** the guide member (6) is adapted to guide the strands such that the interspacing between the strands is equal to the width of the strands wound onto the mandrel (2) times the number of strands minus one.

5. Apparatus as claimed in claim 4, **characterized in that** the guide member (6) is adapted to separate the fibres into two strands and to guide the strands such that the interspacing between the strands is equal to the width of the strands wound onto the mandrel (2).

6. Apparatus as claimed in claim 3, **characterized in that** each of the strands comprises only one fibre.

7. Apparatus as claimed in any of the foregoing claims, **characterized in that** the apparatus comprises an impregnating vessel (7) which is placed between the feed means and the guide member (6) and through which the fibres are guided.

8. Apparatus as claimed in any of the foregoing claims, **characterized in that** the apparatus comprises a press for sliding the pipe formed on the mandrel (2) off the mandrel.

9. Method for winding fibres onto a mandrel (2) to obtain a tubular structure, comprising the following steps of:
- separating into strands the group of fibres coming from a feed means;
- guiding the fibres from a feed means with a guide member (6) into a substantially helical pattern on the mandrel;
- rotating the mandrel (2), while the fibres are guided onto the mandrel;
- moving the guide member (6) in a longitudinal direction of the mandrel (2),
**characterized in that** during the guiding the fibres are separated into at least two strands which are wound onto the mandrel (2) with a mutual interspacing, and by rotating the guide member (6) around the longitudinal axis of the mandrel.

10. Method as claimed in claim 9, **characterized in that** the strands are wound with an interspacing equal to the width of the strand wound onto the mandrel (2) times the number of strands minus one.

11. Method as claimed in claim 9 or 10, **characterized in that** the fibres are separated into strands each comprising one fibre.

12. Method as claimed in claim 9, 10 or 11, **characterized in that** during the winding the strands are guided in reciprocating direction, wherein after a reciprocating movement this movement, offset over a width of one strand, is repeated.

13. Method as claimed in claim 12, **characterized in that** after winding a number of layers corresponding with the number of strands into which the fibres are separated, a new layer is wound.

## Patentansprüche

1. Vorrichtung zum Wickeln von imprägnierten Fasern auf einen Dorn zum Erhalt einer rohrförmigen Struktur, wobei die Vorrichtung umfasst:
- einen Dorn (2);
- eine Rotationseinrichtung, um den Dorn (2) um seine Längsachse in Drehung zu versetzen;
- eine Zuführeinrichtung zum Zuführen der Fasern zum Wickeln;
- ein Führungselement (6), das sich in einem Kreisbogen erstreckt, wobei der Mittelpunkt des Kreisbogens auf der Achse des Doms liegt, um die Fasern zu führen, bevor diese auf den Dorn (2) gewickelt werden; und
- eine Antriebseinrichtung zum Bewegen des Führungselements in der Längsrichtung des Dorns;
**dadurch gekennzeichnet, dass** das Führungselement um die Längsachse des Dorns (2) drehbar ist.

2. Vorrichtung nach Anspruch 1, **dadurch gekennzeichnet, dass** das Führungselement (6) mit Vorsprüngen (10) zum Führen der Fasern ausgerüstet ist.

3. Vorrichtung nach einem der vorhergehenden Ansprüche, **dadurch gekennzeichnet, dass** das Führungselement (6) dazu geeignet ist, die Fasern in mehr als einen Strang zu teilen und die Stränge in solcher Weise zu führen, dass sie mit einem Zwischenraum zueinander auf den Dorn (2) gewickelt werden.

4. Vorrichtung nach Anspruch 3, **dadurch gekennzeichnet, dass** das Führungselement (6) dafür ausgelegt ist, die Stränge in solcher Weise zu führen, dass der Zwischenraum zwischen den Strängen gleich der Breite der auf den Dorn (2) gewickelten Stränge mal der Anzahl der Stränge minus eins ist.

5. Vorrichtung nach Anspruch 4, **dadurch gekennzeichnet, dass** das Führungselement (6) dafür ausgelegt ist, die Fasern in zwei Stränge zu teilen und die Stränge in solcher Weise zu führen, dass der Zwischenraum zwischen den Strängen gleich der Breite der auf den Dorn (2) gewickelten Stränge ist.

6. Vorrichtung nach Anspruch 3, **dadurch gekennzeichnet, dass** jeder der Stränge nur eine Faser umfasst.

7. Vorrichtung nach einem der vorhergehenden Ansprüche, **dadurch gekennzeichnet, dass** die Vorrichtung ein Imprägniergefäß (7) umfasst, das zwischen der Zuführeinrichtung und dem Führungselement (6) angeordnet ist und durch welches die Fasern durchgeführt werden.

8. Vorrichtung nach einem der vorhergehenden Ansprüche, **dadurch gekennzeichnet, dass** die Vorrichtung eine Presseinrichtung umfasst, um das auf dem Dorn (2) geformte Rohr von dem Dorn herunterzuschieben.

9. Verfahren zum Wickeln von Fasern auf einen Dorn (2), um eine rohrförmige Struktur zu erhalten, welches die folgenden Schritte umfasst:
- Trennen der Gruppe von Fasern, die aus einer Zuführeinrichtung kommt, in Stränge;
- Führen der Fasern von einer Zuführeinrichtung mit einem Führungselement (6) in einem im Wesentlichen spiralförmigen Muster auf den Dorn;
- Drehen des Doms (2), während die Fasern auf den Dorn geführt werden;
- Bewegen des Führungselements (6) in einer Längsrichtung des Doms (2)
**dadurch gekennzeichnet, dass**
die Fasern während des Führens in zumindest zwei Stränge getrennt werden, die mit einem Zwischenraum zueinander auf den Dorn (2) gewickelt werden, und zwar unter Drehen des Führungselements (6) um die Längsachse des Doms.

10. Verfahren nach Anspruch 9, **dadurch gekennzeichnet, dass** die Stränge mit einem Zwischenraum gewickelt werden, der gleich der Breite der auf den Dorn (2) gewickelten Stränge mal der Anzahl der Stränge minus eins ist.

11. Verfahren nach Anspruch 9 oder 10, **dadurch gekennzeichnet, dass** die Fasern in Stränge geteilt werden, die jeweils eine einzige Faser umfassen.

12. Verfahren nach Anspruch 9, 10 oder 11, **dadurch gekennzeichnet, dass** die Stränge während des Wickelns in alternierender Richtung geführt werden, wobei nach einer Hin- und Herbewegung diese Bewegung versetzt um die Breite eines Stranges wiederholt wird.

13. Verfahren nach Anspruch 12, **dadurch gekennzeichnet, dass** nach dem Wickeln einer Anzahl von Schichten, die der Anzahl der Stränge entspricht, in welche die Fasern geteilt werden, eine neue Schicht gewickelt wird.

## Revendications

1. Appareil pour enrouler des fibres imprégnées sur un mandrin afin d'obtenir une structure tubulaire, dans lequel l'appareil comprend :
- un mandrin (2) ;
- un dispositif de rotation pour faire tourner le mandrin (2) sur son axe longitudinal ;
- des moyens d'alimentation pour acheminer les fibres à enrouler ;
- un élément guide (6) s'étendant en un arc circulaire, dans lequel le centre de l'arc circulaire se trouve sur l'axe du mandrin pour guider les fibres avant de les enrouler sur le mandrin (2) ; et
- un dispositif d'entraînement pour déplacer l'élément guide dans la direction longitudinale du mandrin, **caractérisé en ce que** l'élément guide peut tourner autour de l'axe longitudinal du mandrin (2).

2. Appareil selon la revendication 1, **caractérisé en ce que** l'élément guide (6) est muni de saillies (10) pour guider les fibres.

3. Appareil selon l'une quelconque des revendications précédentes, **caractérisé en ce que** l'élément guide (6) convient pour séparer les fibres en plus d'un brin et pour guider les brins de sorte qu'ils soient enroulés sur le mandrin (2) avec un espace mutuel entre eux.

4. Appareil selon la revendication 3, **caractérisé en ce que** l'élément guide (6) est adapté pour guider les brins afin que l'espace mutuel entre les brins soit égal à la largeur des brins enroulés sur le mandrin (2) multiplié par le nombre de brins moins un.

5. Appareil selon la revendication 4, **caractérisé en ce que** l'élément guide (6) est adapté pour séparer les fibres en deux brins et pour guider les brins de sorte que l'espace mutuel entre les brins soit égal à la largeur des brins enroulés sur le mandrin (2).

6. Appareil selon la revendication 3, **caractérisé en ce que** chacun des brins ne comprend qu'une fibre.

7. Appareil selon l'une quelconque des revendications précédentes, **caractérisé en ce que** l'appareil comprend une cuve d'imprégnation (7) qui est placée entre les moyens d'alimentation et l'élément guide (6) et à travers laquelle les fibres sont guidées.

8. Appareil selon l'une quelconque des revendications précédentes, **caractérisé en ce que** l'appareil comprend une presse pour faire glisser le tube formé sur le mandrin (2) hors du mandrin.

9. Procédé pour enrouler des fibres sur un mandrin (2) afin d'obtenir une structure tubulaire comprenant les étapes consistant à :
- séparer en brins le groupe de fibres provenant d'un moyen de d'alimentation ;
- guider les fibres d'un moyen d'alimentation avec un élément guide (6) en configuration sensiblement hélicoïdale sur le mandrin ;
- faire tourner le mandrin (2), tandis que les fibres sont guidées sur le mandrin ;
- déplacer l'élément guide (6) dans une direction longitudinale du mandrin (2),
**caractérisé en ce que**, pendant le guidage, les fibres sont séparées en au moins deux brins qui sont enroulés sur le mandrin (2) avec un espace mutuel entre eux tout en faisant tourner l'élément guide (6) autour de l'axe longitudinal du mandrin.

10. Procédé selon la revendication 9, **caractérisé en ce que** les brins sont enroulés avec un espace mutuel entre eux égal à la largeur du brin enroulé sur le mandrin (2) multiplié par le nombre de brins moins un.

11. Procédé selon la revendication 9 ou 10, **caractérisé en ce que** les fibres sont séparées en brins comprenant chacun une fibre.

12. Procédé selon la revendication 9, 10 ou 11, **caractérisé en ce que**, durant l'enroulement, les brins sont guidés dans une direction de va-et-vient, dans lequel, après un mouvement de va-et-vient, ce mouvement décalé sur une largeur d'un brin est répété.

13. Procédé selon la revendication 12, **caractérisé en ce qu'**après l'enroulement d'un certain nombre de couches correspondant au nombre de brins en lequel les fibres sont séparées, une nouvelle couche est enroulée.
